# EUROPEAN PATENT SPECIFICATION

(11) **EP 1 174 823 B1**
(45) Date of publication and mention of the grant of the patent: **23.04.2008**
(21) Application number: 01306274.0
(22) Date of filing: 20.07.2001
(51) Int. Cl.: G06T 3/40

(54) **Method for image scaling**
Verfahren zur massstäblichen Umformung von Bildern
Procédé de mise à l'échelle d'images

(30) Priority: 21.07.2000 JP 2000220042
(43) Date of publication of application: 23.01.2002
(73) Proprietor: MATSUSHITA ELECTRIC INDUSTRIAL CO., LTD, Kadoma-shi, Osaka 571-8501 (JP)
(72) Inventor: Tezuka, Tadanori., 1006 Kadoma. Kadoma-Shi, Osaka 571-8501 (JP); Yoshida, Hiroyuki, 1006 Kadoma. Kadoma-Shi, Osaka 571-8501 (JP); Toji, Bunpei, 1006 Kadoma. Kadoma-Shi, Osaka 571-8501 (JP)
(74) Representative: Shelley, Mark Raymond

(56) References cited:
- EP-A- 0 710 925
- WO-A-00/21066
- US-A- 5 543 819
- US-A- 5 821 913

## Description

This invention concerns a method of performing display reduction of 1/n with a display device having an array of light-emitting elements of the three primary colors of R, G, and B.

Display equipment that employs various types of display devices has been used in the past. Included among such display devices are color LCD's, color plasma displays, and other display devices, which use three light-emitting elements, respectively emitting light of the three primary colors of R, G, and B. Triads of the three emitters are aligned in a fixed pattern to form one pixel. The pixels are conventionally aligned in a first direction to form one line. A plurality of such lines are aligned in a second direction, orthogonal to the first direction, to complete the display screen.

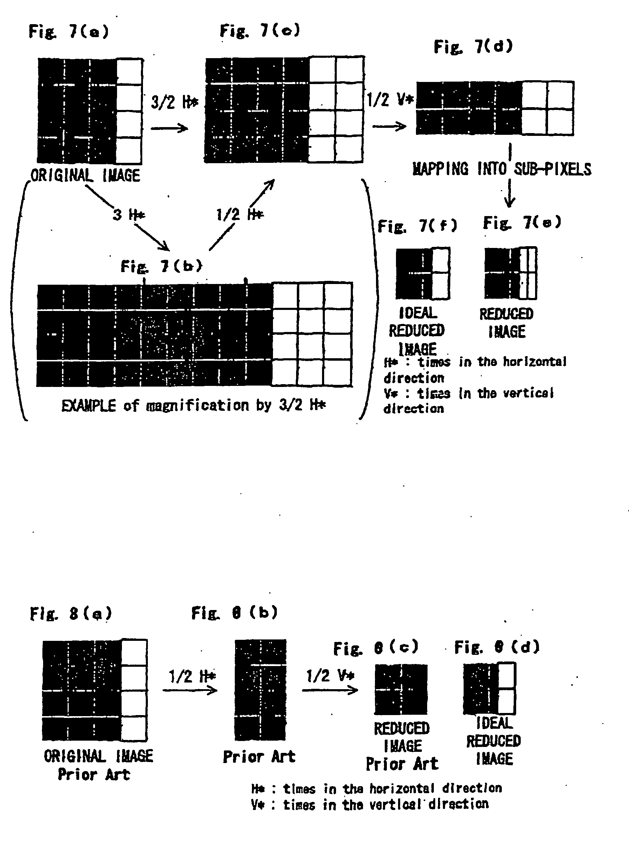

The problem that arises in the case where a display reduction of 1/n is to be performed using such a display device will now be described based on the example shown in Figs. 8(a)-8(d). This example concerns a display reduction of ½ in the vertical and horizontal directions.

If the original image is as shown in Fig. 8(a), the image that is reduced by ½ in the horizontal direction is as shown in Fig. 8(b). When the image is further reduced by ½ in the vertical direction, the image is as shown in Fig. 8(c).

An accurate reduction of the original image by ½ should result in the image shown in Fig. 8(d). However, in actuality, the reduced image is as shown in Fig. 8(c). The white portion at the right side of the column, which was contained in the original image, is lost in the reduction process.

WO-A-00/21066 discloses a weighted mapping of image data samples to pixel sub-components in which different portions of the image are represented on each of multiple pixel sub-components rather, than on entire pixels, thereby increasing the effective resolution of a display by as much of a factor of three in one dimension. Image data is scaled by a given factor in a direction perpendicular to the striping, that is to say the direction in which the RGB pixel sub-components are physically implemented, for example in an LCD display, then a weighted scan conversion is performed to determine intensity values for pixel sub-components. The scaled image data is not displayed as such but is used as intermediate data for determining whether or not a sub-pixel is turned on or off or to set its intensity value in the display equipment such that weighting can be used to take into account the different apparent intensity of the colour components (RGB) as physiologically perceived.

Thus with the prior art, there is the problem that when display reduction is performed, part of the information in the original image is lost and the display becomes unclear.

There is a requirement therefore for a display reduction method in which the loss of information is small.

The present invention provides a display reduction method for reducing dimensions of an image by a factor of 1/n where n is not equal to zero, the image being displayed on a display device, the display reduction method comprising:
storing an original image data consisting of a plurality of pixels arranged in an array with a first direction and a second direction, each of the plurality of pixels having three light-emitting elements emitting first, second and third colour;
forming a working image data by multiplying the original image data by a factor of 3/n in the first direction; and,
allocating a per-pixel image data of the working image data to the three light-emitting elements, thereby displaying the working image data on the display device.

By this arrangement, the loss of information in the first direction is limited by making use of the correspondence of three light-emitting elements to one pixel in regard to the first direction. As a result, a display that is clear and easy to view is obtained even after reduction.

In preferred embodiments, the abovementioned working image data are subject to a filtering process, based on factors that are weighed by the degrees of contribution to luminance of the three primary colors, R, G, and B, prior to making the display device perform the display.

Since this arrangement takes into account the degrees of contribution of luminance of the three primary colors R, G, and B, sub-pixel display is performed and color irregularities are restricted further in comparison to the prior art to improve the quality of the sub-pixel display.

Preferably, the filtering process is performed in one stage.

Since this arrangement takes into account the degrees of contribution of luminance of the three primary colors R, G, and B, color irregularities are limited adequately even by a single-stage filtering process. Moreover, the processing speed is improved by the simplicity of the process.

In other preferred emobidments, the filtering process is performed in two stages.

With this arrangement, the degrees of contribution of luminance of the three primary colors R, G, and B, are taken into account over two stages to enable a fine-tuned filtering process to be performed. Color irregularities are thus further limited, thereby enabling further improvement of the display quality.

Preferably, at least part of the factors are set so that R : G : B = 3 : 6 : 1.

By this arrangement, luminance adjustment is performed in a manner that matches the actual circumstances.

Preferably, the filtering process is performed on a total of three sub-pixels centered about a target sub-pixel.

With this arrangement, since the degrees of contribution of luminance of the three primary colors R, G, and B, are taken into account, color irregularities are limited adequately even by a filtering process performed on a total of three sub-pixels. Moreover, the processing speed is improved by the simplicity of the process.

In other preferred embodiments, the filtering process is performed on a total of five sub-pixels centered about a target sub-pixel.

With this arrangement, since the degrees of contribution of luminance of the three primary colors R, G, and B, are taken into account across a wide range and a fine-tuned filtering process is performed, color irregularities are limited further to enable further improvement in the display quality.

Preferably, an anti-aliasing process is performed in the second direction, after the filtering process and prior to making the display device perform the display.

With this arrangement, jaggedness of the image is made less conspicuous.

In preferred embodiments, the working image data are prepared by magnifying or reducing the original image data by 3/n in the first direction and 1/n in the second direction.

By this arrangement, display reduction of equal rates of reduction in the vertical and horizontal directions is realized with little loss of information.

Various embodiments of the invention will now be more particularly described by way of example, with reference to the accompanying drawings, in which:
Fig. 1 is a block diagram of the display equipment according to an embodiment of this invention;
Fig. 2 is a flowchart to which reference will be made for explaining the display equipment of an embodiment of this invention;
Figs. 3(a), (b), and (c) are explanatory diagrams used in explaining the factors used in an embodiment of this invention;
Figs. 4(a), (b), and (c) are explanatory diagrams used in explaining the factors used in an embodiment of this invention
Figs. 5(a), (b), and (c) are explanatory diagrams concerning the factors used in an embodiment of this invention;
Figs. 6(a), (b), and (c) are explanatory diagrams concerning the factors used in an embodiment of this invention.
Figs. 7(a), (b), (c), (d), and (e) are explanatory diagrams concerning the process of display reduction by an embodiment of this invention;
Fig. 7(f) is an explanatory diagram of an ideal display reduction;
Figs. 8(a), (b), and (c) are explanatory diagrams concerning the process of display reduction by a method of the prior art;
Fig. 8(d) is an explanatory diagram of an ideal display reduction.

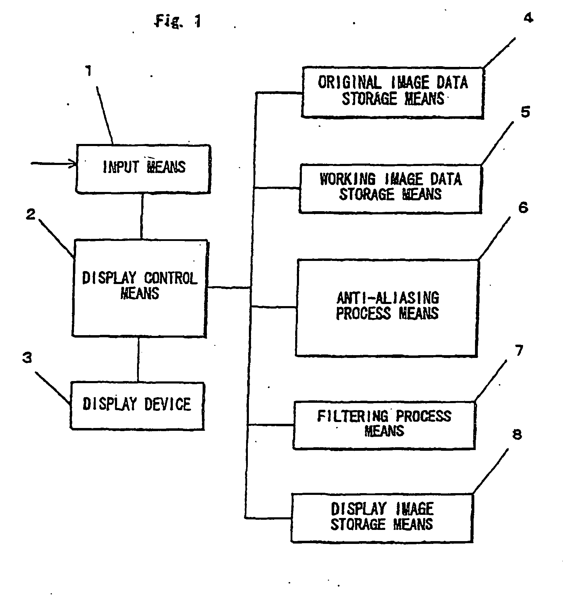

Referring to Fig. 1, an input means 1 inputs, display information. A display image storage means 8 (VRAM, etc.) contains an image for sub-pixel display. A display control means 2 controls the various elements of the system of Figure 1 to make display device 3 display the display image stored in the display image storage means 8.

Display device 3 includes a plurality of sets of three light-emitting elements, which respectively emit light of the three primary colors of R, G, and B. The light-emitting elements are aligned in a fixed order to form one pixel. The pixels are aligned in a first direction to form one line. A plurality of such lines are aligned in a second direction, which is orthogonal to the first direction, to form the display screen. To be more specific, display device 3 may be a color LCD or color plasma display, etc. driven by a driver (not shown) to drive the respective elements of the color LCD or color plasma display, etc.

An original image storage means 4 stores the original image data prior to display reduction. The original image data are raster image data or vector image data that are subsequently developed into raster image data. The original image data may be that of a general image or a font.

In the process of display reduction by display control means 2, a working image data storage means 5 stores a temporary working image, obtained by magnification or reduction of the original image stored in original image data storage means 4.

An anti-aliasing process means 6 performs smoothing of the outlines of a given image.

A filtering process means 7 performs a filtering process, based on factors to be described below, on the working image data stored in working image data storage means 5 and stores the resulting image in display image storage means 8.

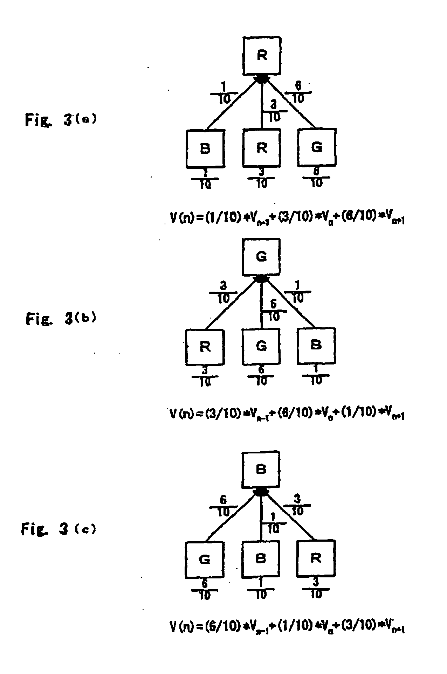

Referring now to Figs. 3(a)-(c), the factors for a first-stage filtering process are shown for one pixel consisting of the three light-emitting elements (sub-pixels) of R, G, and B. The degrees of contribution to luminance of the sub-pixels are such that R : G : B = 3 : 6 : 1.

If as shown in Fig. 3(a), the target sub-pixel is an R sub-pixel, since the sub-pixel to its left is a B sub-pixel and the sub-pixel to the right is a G sub-pixel, energy collection is performed so that, for example, a factor of 1/10 is allocated from the B sub-pixel to the left (one sub-pixel prior to the target sub-pixel, n - 1), 3/10 is allocated from the R sub-pixel, which is the target sub-pixel, and 6/10 is allocated from the G sub-pixel to the right (one sub-pixel after the target sub-pixel, n + 1).

Thus if the respective sub-pixel values V are expressed using a suffix, the value V(n) after the degrees of contribution to luminance are taken into account is such that V(n) = (1/10) * Vₙ₋₁ + (3/10) * Vₙ + (6/10) * Vₙ₊₁.

Likewise, the filtering process when the target sub-pixel is a G sub-pixel is shown in Fig. 3(b). The filtering process when the target sub-pixel is a B sub-pixel is shown in Fig. 3(c).

As can be seen from Figs. 3(a)-(c), if just the factors of the first stage are used, the factors are applied to a total of three sub-pixels centered about the target sub-pixel.

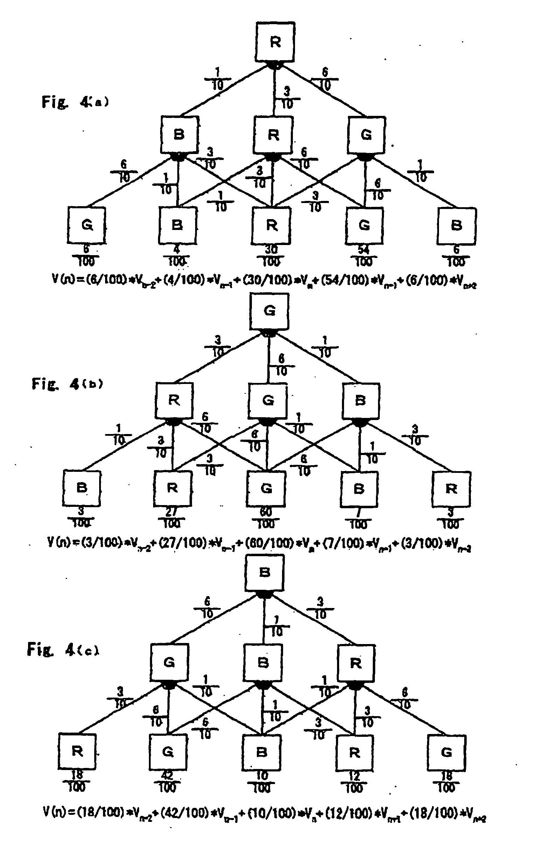

The factors for a second-stage filtering process are described with reference to Figs. 4(a)-(c). The first stage is exactly the same as that shown in Figs. 3(a)-(c). Here, when the target sub-pixel is R, since the order of sub-pixels in the stage below the B sub-pixel that branches from the target sub-pixel is GBR as shown in Fig. 4(a), energy collection is performed by allocating factors of 6/10, 1/10, and 3/10 in that order from the left side.

Likewise, since the order of sub-pixels in the stage below the R sub-pixel that branches from the target sub-pixel is BRG, energy collection is performed by allocating factors of 1/10, 3/10, and 6/10 in that order from the left side. Also, for the G sub-pixel that branches from the target sub-pixel, since the order of sub-pixels in the stage below is RGB, energy collection is performed by allocating factors of 3/10, 6/10, and 1/10 in that order from the left side.

As a result, the hierarchy shown in Fig. 4(a) is formed. With regard to the R sub-pixel (noted sub-pixel, n) at the center of Fig. 4(a), there are three pathways, passing through the B, R, and G sub-pixels, respectively, of the upper stage that lead to this target sub-pixel. The factor for the value V(n) of the target sub-pixel is (1/10) * (3/10) + (3/10)* (3/10) + (6/10) * (3/10) = 30/100.

The factor for the other sub-pixels for the lowermost stage are determined in the same manner so that the value V(n) after the degrees of contribution to luminance are taken into account is such that V(n) = (6/100)* Vₙ₋₂ + (4/100) * Vₙ₋₁ + (30/100)* Vₙ + (54/100) *Vₙ₊₁ + (6/100) * Vₙ₊₂.

Likewise, the filtering process when the target sub-pixel is a G sub-pixel is as shown in Fig. 4(b). The filtering process when the target sub-pixel is a B sub-pixel is as shown in Fig. 4(c).

As is clear from Figs. 4(a)-(c), when factors of two stages are used, the factors are applied to a total of five sub-pixels centered about the target sub-pixel.

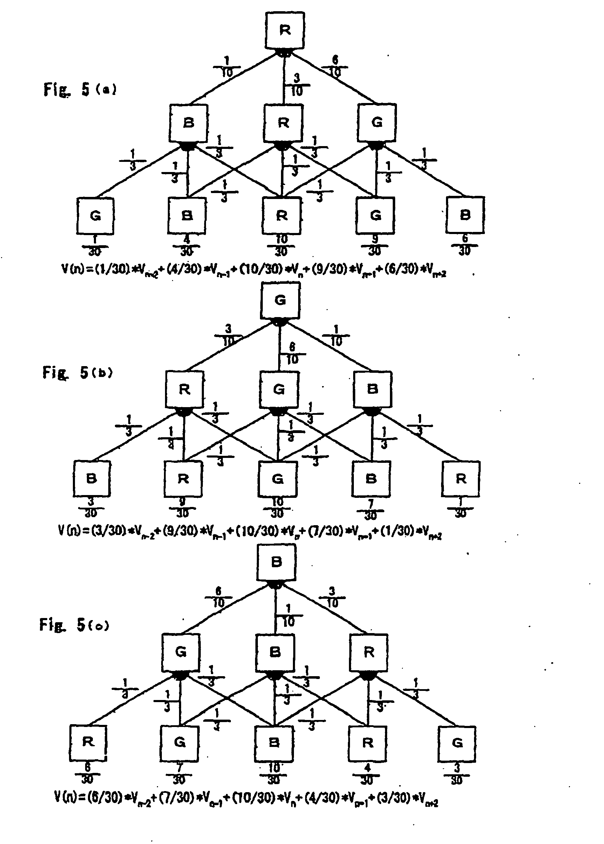

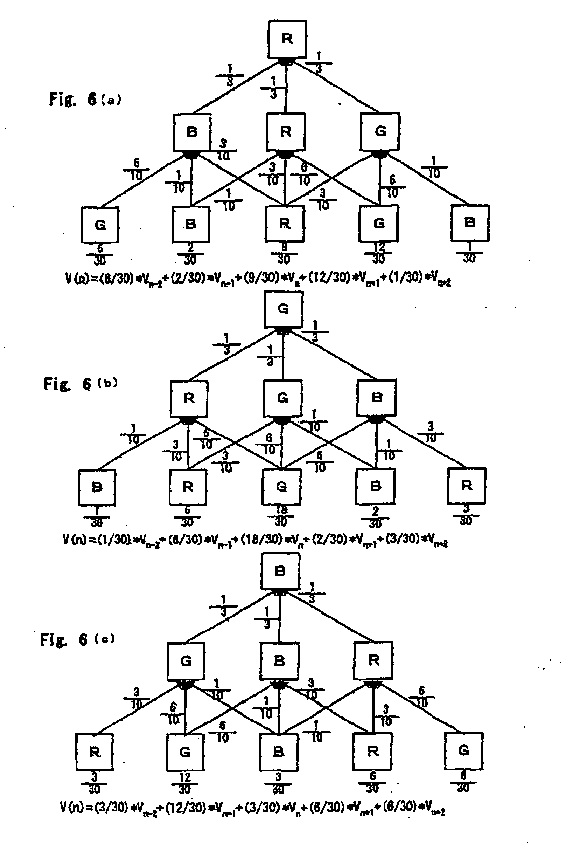

As examples of modifications of the above, those shown in Figs. 5(a)-(c) (where equal factors of (1/3) are allocated to the second stage) and in Figs. 6(a)-(c) (where equal factors of (1/3) are allocated to the first stage) is given. Even when equal allocation is performed on part of the stages as in these examples, if factors that reflect the degrees of contribution to luminance are used in the other stages, this is adequate for practical purposes in many cases. This invention also includes cases where the above weighting is applied to three or more stages.

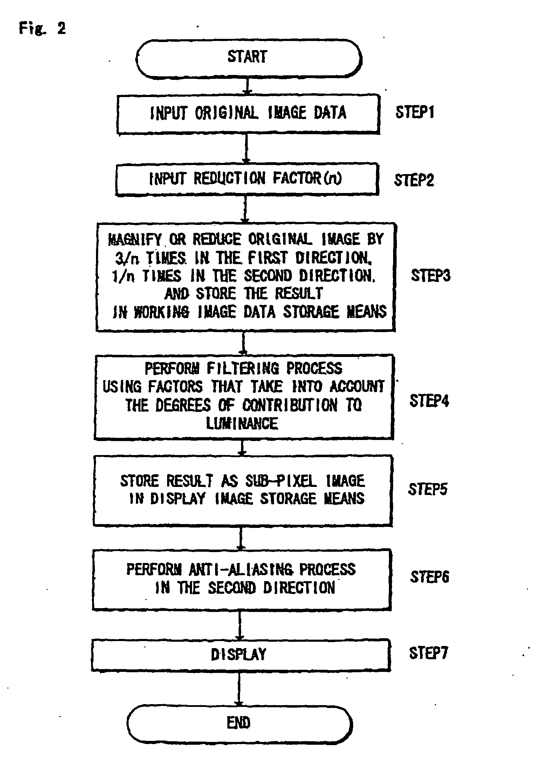

Referring now to the flow chart in Fig. 2, at step 1, the display information indicating that display reduction is to be performed is input to input means 1. The reduction rate (n) is then input from input means 1 (step 2).

Then in step 3, display control means 2 takes the original image data from original image data storage means 4, magnifies or reduces this image by 3/n in the first direction, reduces the original image by 1/n in the second direction, and stores the resulting image in working image data storage means 5. Either direction (vertical/horizontal) may be selected as the first direction of reduction.

Next in step 4, display control means 2 instructs filtering process means 7 to perform a filtering process, using the factors that reflect the degrees of contribution to luminance, on the working image in working image data storage means 5. Here, the factors shown in any of Figs. 3(a)-(c) to 6(a)-(c) may be used.

When the filtering process is completed, filtering process means 5 returns the processed image data to display control means 2. Display control means 2 stores the received data in display image storage means 8. The storage in display image storage means 8 is not in one pixel units but in units of the three light-emitting elements of R, G, and B that comprise one pixel (that is as a sub-pixel image).

Next in step 6, display control means 2 issues an instruction to anti-aliasing process means 6 to perform smoothing in the second direction of the sub-pixel image, stored in display image storage means 8.

Then in step 7, display control means 2 instructs display device 3 to display the image (in the form of sub-pixel display) by allocating the three-times magnified/reduced pattern to the three light-emitting elements that comprise one pixel of display device 3 based on the display image stored in display image storage means 8.

An example of image reduction by the present embodiment will now be described with reference to Figs. 7(a)-(e). In this example, image reduction is performed under the same conditions (by ½ in the vertical and horizontal directions) as those of the prior-art example shown in Fig. 8. The first direction is the horizontal direction of Fig. 8 and the second direction is the vertical direction of Fig. 8.

First, the original image is that shown in Fig. 7(a). The original image data for this image are stored in original image data storage means 4. Image control means 2 then reduces this image by ½ in the vertical direction and magnifies this image by 3/2 in the horizontal direction as shown in Fig. 7(d) and stores the resulting image in working image data storage means 5.

In achieving the condition of Fig. 7(d) from that of Fig. 7(a), the condition of Fig. 7(d) is reached via the conditions shown in Figs. 7(b) and 7(c).

In any case, since the working image data shown in Fig. 7(d) is stored in working image data storage means 5, display control means 2 performs allocation of the working image data of Fig. 7(d) in a manner suitable for sub-pixel mapping and stores the image data of Fig. 7(e) in display image storage means 8. Display reduction, based on a reduced image of sub-pixels, each of which comprises one-third of one pixel, in the first direction (the horizontal direction in this example) is thus performed.

It can be understood that even in comparison to the ideal reduced image shown in Fig. 7(f) the image reduction by this embodiment results in the good image reduction result shown in Fig. 7(e), with which the white part of the row at the right is not lost.

As has been described above, by this invention, the loss of information is limited during display reduction and a reduced display that is easy to view is realized. Also, the filtering factors are arranged to perform high quality display with minimum color irregularities.

Although the invention is described above as controlling R, G and B (red, green and blue) emitters, in some situations, other colors may be selected to produce the desired visual impression. Therefore, the invention should be seen by one skilled in the art to include any combination of color emitters. For example, there may be applications in which only two emitters are required to form a pixel. In other cases, more than three color emitters. For purposes of description, however, the above specification recites the common primary colors of R, G and B colors.

Having described preferred embodiments of the invention with reference to the accompanying drawings, it is to be understood that the invention is not limited to those precise embodiments, and that various changes and modifications may be effected therein by one skilled in the art.

## Claims

1. A display reduction method for reducing dimensions of an image by a factor of 1/n where n is not equal to zero, the image being displayed on a display device, the display reduction method comprising:
storing an original image data consisting of a plurality of pixels arranged in an array with a first direction and a second direction, each of the plurality of pixels having three light-emitting elements emitting first, second and third colour;
forming a working image data by multiplying the original image data by a factor of 3/n in the first direction; and,
allocating a per-pixel image data of the working image data to the three light-emitting elements, thereby displaying the working image data on the display device.

2. A display reduction method as claimed in Claim 1, further comprising:
filtering the working image data; and,
weighting said filtering in accordance with degree of respective contribution to luminance of the first, second and third colour, before displaying the working image data on the display device.

3. A display reduction method as claimed in Claim 2, wherein the first, second and third colour are R, G and B, respectively.

4. A display reduction method as claimed in Claim 2 or Claim 3, wherein at least part of the degree of the respective contribution is given by R:G:B = 3:6:1.

5. A display reduction method as claimed in any one of Claims 2 to 4, wherein said filtering includes filtering in one stage.

6. A display reduction method as claimed in any one of Claims 2 to 4, where said filtering includes filtering in at least two stages.

7. A display reduction method as claimed in any one of Claims 2 to 6, wherein said filtering includes filtering for a total of three sub-pixels centered about a target sub-pixel.

8. A display reduction method as claimed in any one of Claims 2 to 6, wherein said filtering includes filtering for five sub-pixels centred about a target sub-pixel.

9. A display reduction method as claimed in any one of Claims 2 to 8, further comprising:
anti-aliasing in the second direction after said filtering and before displaying the working image data on the display device.

10. A display reduction method as claimed in any preceding claim, further comprising:
multiplying the original image data by a factor of 1/n in the second direction.

11. A display reduction apparatus for reducing dimensions of an image by a factor of 1/n where n is not equal to zero, the image being displayed on a display device (3), the display reduction apparatus comprising:
means (4) for storing an original image data consisting of a plurality of pixels arranged in an array with a first direction and a second direction, thereby filling the display device, each of the plurality of pixels having three light-emitting elements emitting first, second and third colour;
means (5) for forming a working image data by multiplying the original image data by a factor of 3/n in the first direction; and,
means for allocating a per-pixel image data of the working image data to the three light-emitting elements, thereby displaying the working image data on the display device.

## Patentansprüche

1. Display-Reduzierungsverfahren zum Reduzieren der Dimensionen eines Bildes um einen Faktor 1/n, wobei n nicht gleich Null ist, das Bild auf einem Displaygerät dargestellt wird und das Display-Reduzierungsverfahren aus folgenden Stufen besteht:
Speicherung eines Originalbilddatums bestehend aus einer Vielzahl von Pixeln, die in einem Array in einer ersten und einer zweiten Richtung angeordnet sind, wobei jedes der Vielzahl von Pixeln jeweils drei Leuchtdiodenelemente aufweist, die eine erste, zweite und dritte Farbe emittieren;
Bildung eines Arbeitsbilddatums durch Multiplikation des Originalbilddatums mit einem Faktor von 3/n in der ersten Richtung; und
Zuordnung eines Pro-Pixel-Bilddatums des Arbeitsbilddatums an die drei Leuchtdionenelemente, wodurch das Arbeitsbilddatum auf dem Displaygerät dargestellt wird.

2. Display-Reduzierungsverfahren gemäß Anspruch 1, **dadurch gekennzeichnet, dass** es außerdem besteht aus:
Filterung des Arbeitsbilddatums; und
Gewichtung der Filterung gemäß dem jeweiligen Beitragsmaß zur Leuchtwirkung der ersten, zweiten und dritten Farbe, bevor das Arbeitsbilddatum auf dem Displaygerät dargestellt wird.

3. Display-Reduzierungsverfahren gemäß Anspruch 2, **dadurch gekennzeichnet, dass** die erste, zweite und dritte Farbe jeweils rot (R), grün (G) und blau (B) ist.

4. Display-Reduzierungsverfahren gemäß Anspruch 2 oder 3, **dadurch gekennzeichnet, dass** mindestens ein Teil des jeweiligen Beitragsmaßes durch R:G:B = 3:6:1 gegeben wird.

5. Display-Reduzierungsverfahren gemäß einem der Ansprüche 2 bis 4, **dadurch gekennzeichnet, dass** die Filterung eine Filterung in einer Stufe einschließt.

6. Display-Reduzierungsverfahren gemäß einem der Ansprüche 2 bis 4, **dadurch gekennzeichnet, dass** die Filterung eine Filterung in mindestens zwei Stufen einschließt.

7. Display-Reduzierungsverfahren gemäß einem der Ansprüche 2 bis 6, **dadurch gekennzeichnet, dass** die Filterung eine Filterung für insgesamt drei Subpixel einschließt, die um ein Ziel-Subpixel zentriert sind.

8. Display-Reduzierungsverfahren gemäß einem der Ansprüche 2 bis 6, **dadurch gekennzeichnet, dass** die Filterung eine Filterung für fünf Subpixel beinhaltet, die um ein Ziel-Subpixel zentriert sind.

9. Display-Reduzierungsverfahren gemäß einem der Ansprüche 2 bis 8, **dadurch gekennzeichnet, dass** es weiterhin besteht aus:
Anti-Aliasing in der zweiten Richtung nach der Filterung und vor Darstellung des Arbeitsbilddatums auf dem Displaygerät.

10. Display-Reduzierungsverfahren gemäß einem der vorhergehenden Ansprüche, **dadurch gekennzeichnet, dass** es weiterhin besteht aus:
Multiplikation des Originalbilddatums mit einem Faktor 1/n in der zweiten Richtung.

11. Display-Reduzierungsverfahren zum Reduzieren der Dimensionen eines Bildes um einen Faktor 1/n, wobei n nicht gleich Null ist, das Bild auf einem Displaygerät (3) dargestellt wird und der Display-Reduzierungsapparat aus folgenden Stufen besteht:
einer Vorrichtung (4) zur Speicherung eines Originalbilddatums, das aus einer Vielzahl von Pixeln besteht, die in einem Array in einer ersten und einer zweiten Richtung angeordnet sind, wodurch das Displaygerät gefüllt wird, wobei jedes der Vielzahl von Pixeln drei Leuchtdiodenelemente aufweist, die eine erste, zweite und dritte Farbe emittieren;
eine Vorrichtung zur Bildung eines Arbeitsbilddatums durch Multiplikation des Originalbilddatums mit einem Faktor von 3/n in der ersten Richtung; und eine Vorrichtung für die Zuordnung eines Pro-Pixel-Bilddatums des Arbeitsbilddatums an die drei Leuchtdionenelemente, wodurch das Arbeitsbilddatum auf dem Displaygerät dargestellt wird.

## Revendications

1. Procédé de mise à l'échelle d'images permettant de réduire les dimensions d'une image par un facteur 1/n, où n est différent de zéro, l'image étant affichée sur un dispositif d'affichage, le procédé de mise à l'échelle d'images comprenant les étapes consistant à :
stocker les données d'une image d'origine comprenant une pluralité de pixels disposés selon un réseau ayant une première direction et une deuxième direction, chacun des pixels de la pluralité de pixels comportant trois éléments émetteurs de lumière émettant une première, une deuxième et une troisième couleur ;
former des données d'image de travail en multipliant les données de l'image d'origine par un facteur de 3/n dans la première direction ; et,
allouer des données d'image par pixel de l'image de travail aux trois éléments émetteurs de lumière en affichant ainsi les données de l'image de travail sur le dispositif d'affichage.

2. Procédé de mise à l'échelle d'images selon la revendication 1 comprenant en outre les étapes consistant à :
filtrer les données de l'image de travail ; et,
pondérer ledit filtrage en fonction du degré de contribution respectif à la luminance des première, deuxième et troisième couleurs avant d'afficher les données de l'image de travail sur le dispositif d'affichage.

3. Procédé de mise à l'échelle d'images selon la revendication 2 dans lequel les première, deuxième et troisième couleurs sont respectivement le rouge (R), le vert (V) et le bleu (B).

4. Procédé de mise à l'échelle d'images selon les revendications 2 ou 3 dans lequel une partie au moins du degré de contribution respective est donné par R:V:B = 3:6:1.

5. Procédé de mise à l'échelle d'images selon l'une des revendications 2 à 4 dans lequel ledit filtrage est un filtrage à un niveau.

6. Procédé de mise à l'échelle d'images selon l'une des revendications 2 à 4 dans lequel ledit filtrage est un filtrage à deux niveaux au moins.

7. Procédé de mise à l'échelle d'images selon l'une des revendications 2 à 6 dans lequel ledit filtrage est effectué sur un total de trois sous-pixels centrés autour d'un sous-pixel cible.

8. Procédé de mise à l'échelle d'images selon l'une des revendications 2 à 6 dans lequel ledit filtrage est effectué sur cinq sous-pixels centrés autour d'un sous-pixel cible.

9. Procédé de mise à l'échelle d'images selon l'une des revendications 2 à 8 comprenant en outre l'étape consistant à :
effectuer un lissage dans la deuxième direction après ledit filtrage et avant d'afficher les données de l'image de travail sur le dispositif d'affichage.

10. Procédé de mise à l'échelle d'images selon l'une des revendications précédentes comprenant en outre l'étape consistant à :
multiplier les données de l'image d'origine par un facteur de 1/n dans la deuxième direction.

11. Appareil de mise à l'échelle d'images permettant de réduire les dimensions d'une image par un facteur 1/n, où n est différent de zéro, l'image étant affichée sur un dispositif d'affichage (3), l'appareil de mise à l'échelle d'images comprenant :
un moyen (4) permettant de stocker les données d'une image d'origine comprenant une pluralité de pixels disposés selon un réseau ayant une première direction et une deuxième direction, et de remplir ainsi le dispositif d'affichage, chacun des pixels de la pluralité de pixels comportant trois éléments émetteurs de lumière émettant une première, une deuxième et une troisième couleur ;
un moyen (5) permettant de former des données d'image de travail en multipliant les données de l'image d'origine par un facteur de 3/n dans la première direction ; et,
un moyen permettant d'allouer des données d'image par pixel de l'image de travail aux trois éléments émetteurs de lumière en affichant ainsi les données de l'image de travail sur le dispositif d'affichage.
